# EUROPEAN PATENT APPLICATION

(11) **EP 1 098 117 A1**
(43) Date of publication of application: **09.05.2001**
(21) Application number: 00917422.8
(22) Date of filing: 21.04.2000
(51) Int. Cl.: F16J 15/34

(54) **MECHANICAL SEAL FOR COMPRESSOR**

(30) Priority: 23.04.1999 JP 11580999
(71) Applicant: KABUSHIKI KAISHA TOYODA JIDOSHOKKI SEISAKUSHO, Kariya-shi, Aichi-ken (JP); EAGLE INDUSTRY Co., Ltd., Tokyo 105-8587 (JP)
(72) Inventor: FUJII, Toshiro, Kariya-shi, Aichi 448-8671 (JP); YOKOMACHI, Naoya, Kariya-shi, Aichi 448-8671 (JP); NAKAHARA, Nobuo, Minato-ku, Tokyo 105-8587 (JP)
(74) Representative: Karrais, Martin
(86) International application number: JP0002641
(87) International publication number: WO0065260

(57) **Abstract**

A mechanical seal for compressor, wherein a mating ring (31) on the stationary side is made of a self-lubricating sliding material and a circumferentially continued sliding projection (31a) is formed at the end part thereof facing a seal ring (32) side, the seal ring (32) on the rotating side is made of a hard sliding material larger in Young's modulus than the self-lubricating sliding material and fitted axially movably to a rotating shaft (2) through a shaft packing (34), whereby, because any sliding projection is not formed on the seal ring (32), an axial length L on which a pressure difference between a pressure and the atmospheric pressure acts becomes shorter on the mating ring (31) side rather than at a part sealed by the shaft packing (34), a deformation due to the pressure difference is reduced because of higher Young's modulus, and thus an uneven wear on a sealed sliding surface S due to the deformation can be suppressed.

## Description

### TECHNICAL FIELD

The present invention relates to a mechanical seal used as a shaft sealing means for a compressor.

### BACKGROUND ART

Noncombustible and safe CFC-R12 (CF₂Cl₂) which does not degenerate and is harmless to a human has been conventionally used as a coolant in an air conditioner such as an air conditioner for an automobile (car air conditioner). However, the CFC-R12 released into the air remains in the air as it is without degenerating and is carried to the stratosphere due to the general circulation of the air. Consequently, the CFC-R12 is decomposed by ultraviolet radiation having a wavelength of 0.19 to 0.25 µm, which hardly exists in the vicinity of the surface of the earth, so that chlorine Cl is produced. The chlorine Cl is joined to ozone O₃ in the stratosphere to produce chlorine oxide ClO and an oxygen molecule O₂. The chlorine oxide ClO reacts to the ambient oxygen atoms O to produce chlorine Cl and an oxygen molecule O₂. Due to the fact that the reactions are repeated, a reduction in the amount of ozone O₃ and oxygen atoms O in the stratosphere is accelerating, thus leading to a destruction of the ozone layer. To prevent the destruction of the ozone layer, in recent years, the CFC-R12, as a coolant, has been replaced with HFC-R134a which does not contain-chlorine. However, a new problem that even a very small amount of HFCs are considerably related to the greenhouse effect the atmospheric heating phenomenon caused by the absorption of the longer wavelength (infrared radiation) from the ground surface has been raised. Attempts to find a coolant with which HFC-R134a is to be replaced have been made. Today, the leading substitute is carbon dioxide CO₂.

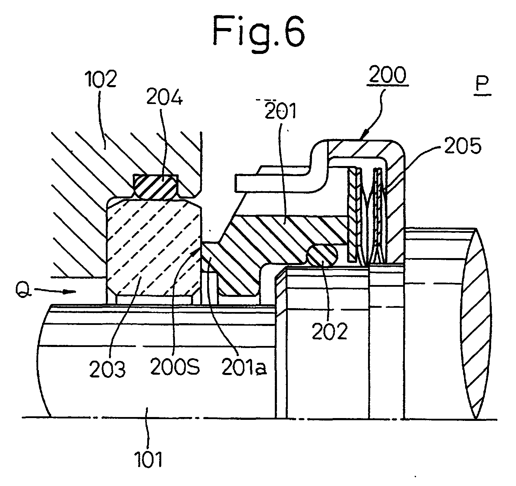

An example of a known typical mechanical seal which is used as a shaft sealing means for a coolant gas compressor is shown in Fig. 6. The mechanical seal 200 as shown in Fig. 6 is comprised of a seal ring 201 which is mounted to a rotating shaft 101 of a coolant gas compressor through an O-ring 202 to move in the axial direction and which is rotated together with the rotating shaft 101. The seal ring 201 is tightly pressed against a non-rotatable mating ring 203 which is provided on the side of a seal housing 102 in an air-tight fashion through an O-ring 204, by a force of springs 205 in the axial direction, so that a sealing surface 200S is formed between the rings 201 and 203 which are brought into close sliding contact with each other. The mechanical seal 200 prevents the coolant gas and a refrigerator oil introduced in a machine inner space P which is formed on the right side in the drawing and reaching the inner periphery of the sealing surface from leaking therethrough into a space Q connected to the atmosphere. The seal ring 201 is made of carbon and is provided with a circumferentially Continuous sliding projection 201a which is called a nose, and which is in sliding contact with the mating ring 203. The mating ring 203 is made of a harder material than the carbon.

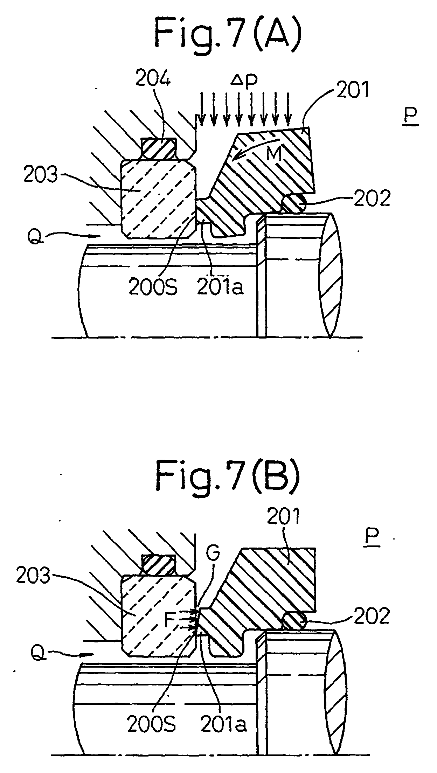

In the conventional mechanical seal 200 as mentioned above, the seal ring 201 which is made of a carbon having a small Young's modulus can be obliquely deformed as shown in Fig. 7(A) in which the deformation is exaggerated. This is because the portion of the seal ring 201 from the O-ring 202 and the portion 201a adjacent to the mating ring is subject to the deforming force as indicated by an arrow M by a pressure difference ΔP between the coolant gas pressure in the machine inner space P and the atmospheric pressure in the space Q on the atmospheric side. Moreover, in the case that the HFC-R134a is used as the coolant gas, the suction pressure and discharge pressure of the coolant gas compressor are approximately 0.1 - 0.3 MPa and 1 - 3 MPa under the normal conditions, respectively, and in the case that CO₂ is used as the coolant gas, the suction pressure and the discharge pressure are respectively increased approximately to 3 - 4 MPa and 7 - 13 MPa, and hence the deformation becomes more remarkable due to an increase in the pressure difference ΔP. Consequently, the sliding projection 201a of the seal ring 201 increases in the sealing surface pressure against the mating ring 203 at the outer periphery side thereof. This causes a deviative wearing in which the amount of wearing of the seal ring on the outer periphery side is greater by about 1 - 5 µm than that on the inner periphery side.

Thus, if the displacement M is reduced due to a pressure drop of the coolant CO₂ in the inner space P, there is a gap G which opens into the outer peripheral side (toward the inner space P) at the sealing surface 200S due to the deviative wearing, as shown in Fig. 7(B). Consequently, the force F which opens the sealing surface 200S is increased by the application of the pressure in the inner space P to the gap G. In addition, an oil film which is produced by the refrigerator oil supplied thereto, which exists in the form of mist in the coolant CO₂ is formed on the sealing surface 200S. The oil film considerably contributes to a prevention of the leakage of the coolant CO₂. Nevertheless, if the outwardly opening gap G is formed, the width of the sealing surface 200S is remarkably reduced and the oil film existing therein is also remarkably reduced. Consequently, the coolant CO₂ tends to leak due to an absence of the oil film on the sealing surface 200S.

Furthermore, upon driving the compressor, the refrigerator oil existing in the coolant gas CO₂ in the form of mist is carried by the flow of the coolant of CO₂ gas onto the outer periphery of the sealing surface 200S. The lubricant film at the sealing surface 200S does not permit the coolant of CO₂ gas to pass therethrough. However, when the compressor is stopped, the refrigerator oil drops onto the lower portion of the inner space P, so that the large part of the inner space P defines a gas zone. Therefore, the sealing surface 200S runs short of oil film, and thus the highly pressurized coolant of CO₂ gas tends to leak.

### DISCLOSURE OF THE INVENTION

It is an object of the present invention to eliminate the drawbacks mentioned above and to effectively prevent a leakage of the coolant by restricting a deviative wearing of the sealing surface of the mechanical seal caused by the pressure of the highly pressurized coolant or by preventing a shortage of the oil film on the sealing surface upon stoppage.

A mechanical seal for a compressor, according to the present invention comprises a sliding ring on a rotation side, which is mounted to a rotating shaft of a compressor through a shaft packing to move in the axial direction and which is rotated together with the rotating shaft and a non-rotatable sliding ring on a stationary side, which is secured to a seal housing of the compressor in an air-tight fashion and which defines together with the sliding ring on the rotation side a sealing surface, wherein a space to be sealed in which a gas exists communicates with the outer periphery of the sealing surface, the stationary ring is made of a self-lubricating seal face material, rotating ring is made of a seal face material having a large Young's modulus greater than that of the self-lubricating seal face material, stationary ring is in sliding contact with the rotating ring through a sliding projection extending in the circumferential direction. In this structure, there can be preferably used, as the self-lubricating seal face material, a carbon, a PTFE (polytetrafluoroethylene), or a polyimide.

With this arrangement, the rotating ring is subject to a deformation force toward the inner peripheral side due to the gas pressure acting between the sealed portion by the shaft packing and the sealing surface. However, since the sliding projection is formed on the stationary ring, the axial length from the sealed portion by the shaft packing to the sealing surface is shortened. Moreover, the Young's modulus of the rotating ring is greater than that of the stationary ring. Therefore, the deformation of the rotating ring to incline the same is restricted and hence the deviative wearing of the sealing surface on the outer periphery side can be restricted.

In an preferred embodiment of the invention, one or both of the end surface of the sliding projection of the stationary ring and the end surface of the rotating ring, both end surfaces defining the sealing surface is or are provided with a circumferentially continuous groove or circumferentially continuous grooves. The groove serves as an oil reservoir to prevent an absence of an oil film at the sealing surface when the driving is stopped.

The present invention will be understood more clearly from the accompanying drawing and the following description of the preferred embodiments of the invention

### BRIEF DESCRIPTION OF THE DRAWINGS

Figure 1 is a sectional view of a first embodiment of a mechanical seal for a compressor, according to the present invention, taken along a plane passing through the axis thereof.
Figure 2 is an explanatory view of the operation of the first embodiment shown in Fig. 1.
Figure 3 is a sectional view of main parts of a second embodiment of a mechanical seal for a compressor, according to the present invention, taken along a plane passing through the axis thereof.
Figure 4 is a sectional view of main parts of a third embodiment of a mechanical seal for a compressor, according to the present invention, taken along a plane passing through the axis thereof.
Figure 5 is a sectional view of main parts of a fourth embodiment of a mechanical seal for a compressor, according to the present invention, taken along a plane passing through the axis thereof.
Figure 6 is a sectional view of an upper half of a known mechanical seal for a CO₂ compressor, taken along a plane passing through the axis thereof.
Figures 7(A) and 7(B) are explanatory views of an occurrence of a deviative wearing in the prior art.

### BEST MODE FOR CARRYING OUT THE INVENTION

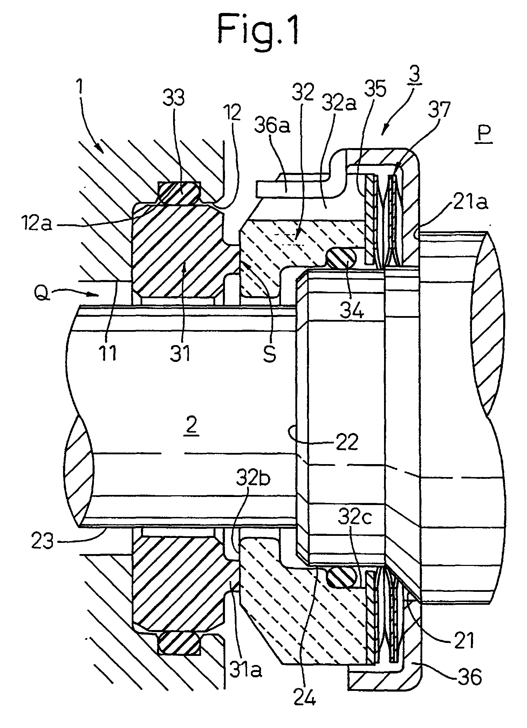

Fig. 1 shows a first embodiment of a mechanical seal for a compressor according to the present invention, in which numeral 1 designates the seal housing for a car air conditioner using carbon dioxide CO₂ as a coolant, numeral 2 designates a rotating shaft which extends through the inner peripheral surface of a shaft hole 11 of the seal housing 1 into the compressor, so that the rotating shaft 2 can be rotated when the drive force from a crank shaft of an engine is transmitted thereto through en electromagnetic clutch (not shown) to thereby drive an internal mechanism of the compressor. There is a mechanical seal 3 between the seal housing 1 and the rotating shaft 2, according to an embodiment of the invention.

The mechanical seal 3 is comprised of a mating ring 31 which constitute a stationary ring attached to the seal housing so as not to rotate, and a seal ring 32 which constitutes a drive ring attached to the rotating shaft 2 so as to rotate together with the rotating shaft 2. The seal ring 32 is opposed to the mating ring 31 in the axial direction. The opposed end surfaces thereof define a surface S to seal the shaft. For the space around the shaft of the mechanical seal 3 on opposite sides in the axial direction, the right space P of the seal housing 1 in Fig. 1 and communicating with the outer periphery of the sealing surface S defines a machine inner space to be sealed, and the left space Q communicating with the inner periphery of the sealing surface S in the drawing defines an air space connected to the outside of the machine.

The structure of the mechanical seal 3 will be discussed below in more detail. The mating ring 31 is made of a carbon and is received in an annular recess 12 of an enlarged diameter formed at the opening end of the shaft hole 11 on the inner side of the machine. The mating ring 31 is immovably fitted in the annular recess 12 with the outer peripheral surface being sealed through an O-ring 33 which is fitted in an annular groove 12a extending continuously along the peripheral surface of the annular recess 12. The mating ring 31 is provided, on its end exposed from the annular recess 12 and facing the seal ring 32, with a sliding projection 31a which extends continuously in the circumferential direction.

The seal ring 32 is made of a hard material (e.g., a ceramic, such as SiC) whose Young's modulus is greater than that of the carbon. The seal ring 32 is located adjacent the inner space P with respect to the mating ring 31 and is mounted to the outer surface of the rotating shaft 2 to move in the axial direction through a shaft packing made of an O-ring. The shaft packing 34 is received in a packing mounting recess 32c formed on the rear and inner peripheral surface of the seal ring 32 and is attached to the seal ring 32. A retainer 35 made of a metal plate abuts against the rear surface of the seal ring 32 (opposed to the mating ring 31). The inner peripheral edge of the retainer 35 extends to cover the rear portion of the packing mounting recess 32c of the seal ring 32.

A case 36 made of a metal plate with a flange is provided on the rear side of the retainer 35. The case 36 engages in the axial direction with the tapered portion 21 formed on the outer peripheral surface of the rotating shaft 2, and in the circumferential direction with a cut-away portion 21a formed by cutting a part of the rotating shaft in the circumferential direction. Coiled wave springs 37 are arranged between the retainer 35 and the case 36 and are appropriately compressed in the axial direction. The case 36 is provided on its outer peripheral surface with a plurality of axially extending engagement pawls 36a that are spaced at an equal phase distance. The engagement pawls 36a engage with engagement recesses 32a formed on the outer peripheral surface of the seal ring 32 at an equal phase distance to relatively move in the axial direction.

Namely, the seal ring 32 is pressed, at an appropriate surface pressure, at its front end surface 32b, against the front end face of the sliding projection 31a of the mating ring 31 by the axial force of the coiled wave springs 37 through the retainer 35. Also, the seal ring 32 is rotated together with the rotating shaft 2 when it receives the rotational torque from the rotating shaft 2 through the case 36. Consequently, the sealing surface S is established between the seal ring 32 and the sliding projection 31a.

The rotating shaft 2 is provided with a stepped annular portion 22 located in the inner peripheral surface of the seal ring 32. The stepped annular portion 22 divides a smaller diameter insertion portion 23 which is inserted in the shaft hole 11 of the seal housing 1 and the inner peripheral surface of the mating ring 31 and a larger diameter seal ring supporting portion 24 on which the shaft packing 34 is fitted to move in the axial direction.

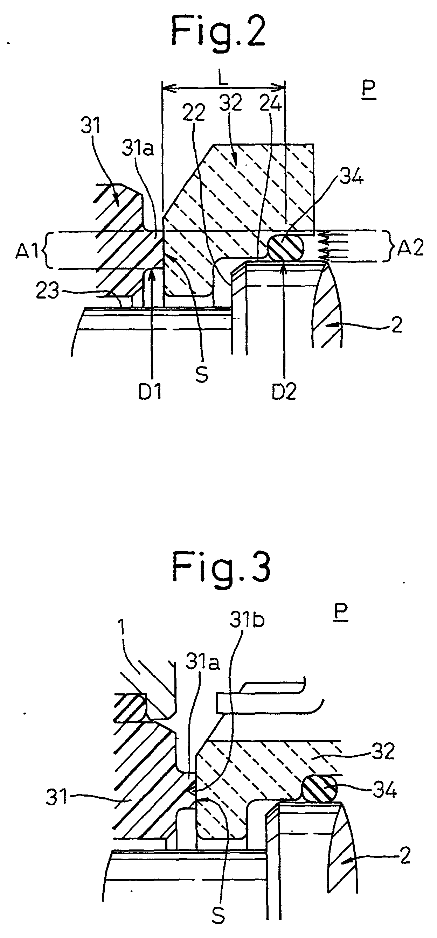

The inner diameter of the mating ring 3 and the inner diameter of the portion of the seal ring 32 adjacent to the mating ring 31 are smaller than the diameter of the seal ring supporting portion 24 of the rotating shaft 2. As can be seen in Fig. 2, the inner diameter D1 of the sealing surface S (inner diameter of the sliding projection 31a) defined between the mating ring 31 and the seal ring 32 is identical to or smaller than the seal diameter D2 defined by the shaft packing 34 and the seal ring supporting portion 24. Namely, the surface area A1 of the sealing surface S is equal to or larger than the pressure receiving surface area A2 which receives the pressure of the machine inner space P which serves as the axial force to press the seal ring 32 toward the mating ring 31. Thus, the mechanical seal 3 is of a pressure-balance type structure in which no substantial change in the surface pressure of the sealing surface S takes place if the pressure of the CO₂ gas coolant in the machine inner space P changes.

In the structure mentioned above, the CO₂ gas coolant which is compressed at high temperature and under high pressure in the machine contains a refrigerator oil mixed therein in the form of a mist during driving of the compressor in which the rotating shaft 2 rotates, and a part of the oil enters the sealing surface S and forms a lubricant film to effectively lubricate the sealing surface S and prevents the CO₂ gas coolant from passing therethrough into the atmospheric space Q.

Since the CO₂ gas coolant in the machine inner space P is higher in pressure than the atmospheric pressure in the atmospheric space Q, a pressure difference between the gas pressure and the atmospheric pressure acts on the seal ring 32. However, in the illustrated embodiment, the sliding projection 31a is provided on the mating ring 31 but no sliding projection is provided on the seal ring 32, and accordingly, the length L of the seal ring in the axial direction from the sealed portion by the shaft packing 34 to the sealing surface S can be shorter in comparison with the prior art. In addition, since the seal ring 32 is made of a hard material having a large Young's modulus, the deformation of the seal ring 32 in the oblique direction due to the pressure difference can be restricted. Consequently, the deviative wearing of the sliding projection 31a of the mating ring 31 on the outer peripheral side thereof can be minimized.

Sliding tests using a compressor have proved that the deviative wearing produced at the end surface of the sliding projection 31a of the mating ring 31 was not greater than 1 µm at the maximum. Consequently, a sufficient amount of lubricant film was formed at the sealing surface S and the leakage of the CO₂ gas coolant was remarkably reduced.

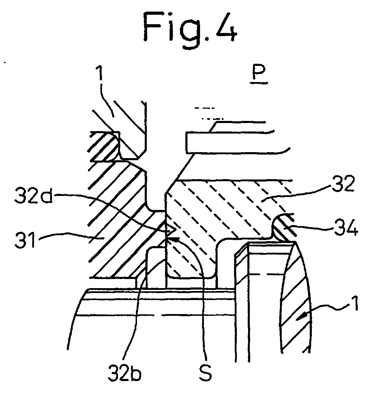

As mentioned above, when the rotating shaft 2 is rotated upon driving of the compressor, the refrigerator oil is mixed in the form of a mist in the CO₂ gas coolant which is compressed at high temperature and under high pressure in the machine, so that a part of the refrigerator oil enters the sealing surface S and forms a lubricant film. However, when the compressor is stopped, the refrigerator oil drops onto the lower portion of the inner space P and accordingly the inner space P becomes a gas zone. Consequently, the sealing surface S runs short of lubricant film and enters a dry-contact state. As a result, there is fear that a leakage of the CO₂ gas coolant into the atmospheric space Q tends to occur. In embodiments illustrated in Figs. 3 and 4, the leakage due to the absence of the oil film when the compressors is stopped is prevented.

Namely, in the second embodiment shown in Fig. 3, the sliding projection 31a of the mating ring 31 is provided, on its front end surface which constitutes the sealing surface S, with a lubricant groove 31b which extends continuously in the circumferential direction. In the third embodiment shown in Fig. 4, the lubricant groove 32d is formed on the front end face 32b of the seal ring 32 which constitutes the sealing surface S. Other structures in the second and third embodiments are the same as those of the first embodiment.

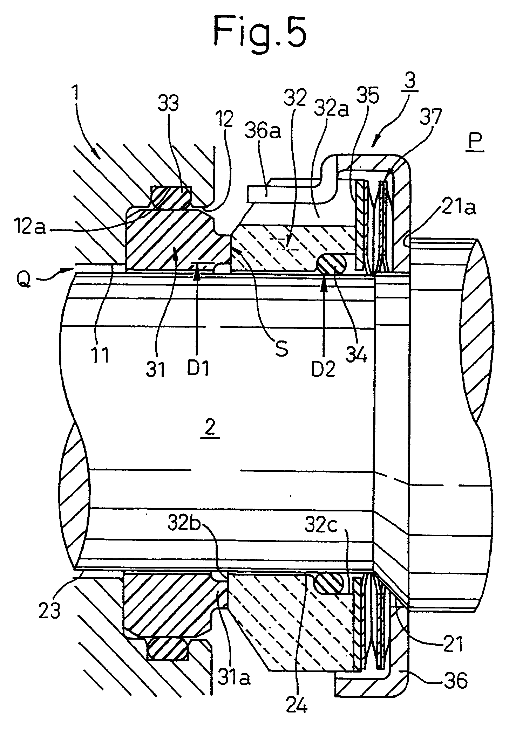

In these embodiments, the refrigerator oil entering the sealing surface S to form the lubricant film upon driving of the compressor enters and is stored in the sealed lubricant groove 31b or 32d. Consequently, if the inner space P becomes a gas zone when the compressor is stopped, the oil stored in the lubricant groove 31b or 32d forms a lubricant film at the sealing surface S due to the capillary action, and thus it is possible to effectively prevent the leakage of the CO₂ gas due to an absence of the oil film. Note that in each of the above-mentioned embodiments, although the inner diameter of the sliding ring on the stationary side is smaller than the outer diameter portion defined by the stepped annular portion, it is possible to make the inner diameter of the sliding ring on the stationary side larger than the outer diameter portion of the stepped annular portion as in a fourth embodiment shown in Fig. 5.

Although the mating ring 31 is made of a carbon, it is possible to make the mating ring of other self-lubricating material, such as PTFE or polyimide, etc. Moreover, the it is possible to make the seal ring of a ceramic such as SiC or the Al₂O₃ or a cemented carbide alloy. Although CO₂ gas is used as the coolant in the above-mentioned embodiments, the present invention is not limited thereto and can be equally applied to other highly pressurized coolant gas.

According to a mechanical seal for a compressor according to the present invention, it is possible to effectively prevent an increase of the leakage of the coolant gas due to the deviative wearing of the sealing or an increase of the leakage of the coolant gas due to the lack of the oil film at stoppage of the compressor, even if the internal pressure is high in an air conditioner.

The above discussion has been addressed to specific embodiments, but various modifications or changes can be made by an artisan without departing from the spirit of the invention or the scope of the claims.

## Claims

1. A mechanical seal for a compressor, comprising
a sliding ring on a rotation side, which is mounted to a rotating shaft of a compressor through a shaft packing to move in the axial direction and which is rotated together with the rotating shaft; and
a non-rotatable sliding ring on a stationary side, which is secured to a seal housing of the compressor in an air-tight fashion and which defines together with the sliding ring on the rotation side a sealing surface;
wherein a space to be sealed in which a gas exists communicates with the outer periphery of the sealing surface, characterized in that;
said sliding ring on the stationary side is made of a self-lubricating material,
said sliding ring on the rotation side is made of a material having a Young's modulus greater than that of the self-lubricating material,
said sliding ring on the stationary side is in sliding contact with the sliding ring on the rotation side through a sliding projection extending in the circumferential direction.

2. A mechanical seal for a compressor according to claim 1, wherein said rotating shaft is provided with a stepped annular portion, so that the sliding ring on the rotation side is provided on the large diameter portion of the stepped annular portion and the sliding ring on the stationary side is provided on the small diameter side, the inner diameter of the sliding ring on the stationary side being smaller than the large diameter portion of the stepped annular portion.

3. A mechanical seal for a compressor according to claim 1 or 2, wherein said self-lubricating material is a carbon, a PTFE, or a polyimide.

4. A mechanical seal for a compressor according to claim 1 or 2, wherein the material of the sliding ring on the rotation side is ceramics or cemented carbide alloy.

5. A mechanical seal for a compressor according to claim 1 or 2, wherein one or both of the end surfaces of the sliding projection of the sliding ring on the stationary side and of the sliding ring on the rotation side, that define the sealing surface, are provided with a circumferentially continuous groove.

6. A mechanical seal for a compressor according to claim 1, wherein the compressor is a compressor for an air conditioner and uses a CO₂ gas as a coolant.
